# EUROPEAN PATENT SPECIFICATION

(11) **EP 1 599 347 B1**
(45) Date of publication and mention of the grant of the patent: **21.10.2009**
(21) Application number: 04714766.5
(22) Date of filing: 26.02.2004
(51) Int. Cl.: B60B 3/14, B60B 3/16, B60B 27/06

(54) **WHEEL FIXING DEVICE PARTICULARLY FOR GO-KARTS OR SIMILAR VEHICLES**
RADBEFESTIGUNGSVORRICHTUNG, INSBESONDERE FÜR GOKARTS ODER ÄHNLICHE FAHRZEUGE
DISPOSITIF DE FIXATION DE ROUE DESTINE, NOTAMMENT, A DES KARTS OU VEHICULES SIMILAIRES

(30) Priority: 28.02.2003 IT VR20030024
(43) Date of publication of application: 30.11.2005
(73) Proprietor: Galvanin, Claudio, 36077 Altavilla Vicentina VC (IT)
(72) Inventor: Galvanin, Claudio, 36077 Altavilla Vicentina VC (IT)
(74) Representative: Alagem Modiano, Lara S.
(86) International application number: PCT/EP2004/001917
(87) International publication number: WO 2004/076203

(56) References cited:
- US-A- 5 492 391
- US-A- 6 116 700
- US-B1- 6 193 320
- US-B1- 6 322 158

## Description

### Technical Field

The present invention relates to a wheel fixing device particularly suitable for go-karts or similar vehicles.

### Background Art

Motor vehicle wheel assemblies are generally mounted by fixing the wheel to the hub by means of a plurality of screws.

In particular, as regards karting vehicles, three evenly angularly spaced threaded holes (female threads) are generally provided at the peripheral portion of the end plane of the hub (which is generally made of magnesium alloy or otherwise rather "soft" alloys); such threaded holes are designed to be engaged by respective fixing stems, the respective tips of which are threaded, such stems being adapted to allow locking of the wheel between the end plane of the hub and respective locking bolts, at the same time ensuring both locking of the wheel assembly to the hub and transmission of torque from the axle shaft to the wheel assembly in the case of driving wheels.

The devices currently in use and briefly described here above, though being widely used in the karting field, are not free from drawbacks.

In particular, it is evident that the operations for fixing the wheel are rather complicated, since it is necessary first of all to make the holes of the wheel to be fixed coincide with the threaded stems supported by the hub and then screw three bolts for each wheel to the respective threaded stems.

In recent times, several solutions have been proposed especially in order to try to make faster and more effective fixing the wheel assemblies to the hubs.

For example, with reference to racing cars, fixing devices have been provided which are constituted by a single fixing bolt which is designed to engage within a respective threaded element supported by the hub or otherwise rigidly coupled thereto.

A wheel adaptor with quick coupling is disclosed, for example, in US 6 116 700, which is suitable for mounting on the lug studs of a vehicle. However, such a solution cannot be used on go-karts and on similar vehicles, since it would be highly unreliable to screw directly onto the hub, which, as mentioned, is generally made of magnesium alloy, a single wheel locking screw.

### Disclosure of the Invention

The aim of the present invention is to provide a wheel fixing device particularly suitable for go-karts or similar vehicles that is capable of eliminating or otherwise reducing significantly the drawbacks noted above in known types.

Within this aim, an object of the present invention is to provide a wheel fixing device that allows to reduce the time required for mounting/removing the wheel with respect to the hub.

Another object of the invention is to provide a fixing device that allows to ensure rapid and effective centering of the wheel on the respective hub.

Another object of the invention is to provide a wheel fixing device that has a low production cost in order to be advantageous also from an economical standpoint.

This aim and these and other objects that will become better apparent according to the present hereinafter are achieved by a wheel fixing device, according to the present invention, that has the features set forth in claim 1.

Advantageously, in the fixing device according to the invention the stem lies substantially along the rotation axis of the respective hub and in that the retaining portion comprises a first thread supported by the stem and the locking means comprise a female thread element that is designed to engage said first thread.

Conveniently, in the fixing device according to the invention the engagement means comprise at least one contoured profile that is supported by the connecting element and in that the respective abutment portion comprises an abutment profile that is rigidly coupled to the wheel, is shaped so as to match the contoured profile, and is adapted to engage said contoured profile.

### Brief description of the drawings

Further features and advantages of the invention will become better apparent from the following detailed description of currently preferred embodiments, given merely by way of non-limiting examples with reference to the accompanying drawings, wherein:
Figure 1 is a perspective view of a fixing device according to the invention, in which a portion of the wheel has been omitted for the sake of greater clarity;
Figure 2 is an exploded perspective view, similar to Figure 1;
Figure 3 is a side elevation view of a hub;
Figure 4 is a sectional view, taken along a diametrical plane, of the hub shown in Figure 3;
Figure 5 is a side elevation view of a connecting element of a fixing device according to the invention;
Figure 6 is a sectional view, taken along a diametrical plane, of the connecting element shown in Figure 5;
Figure 7 is a side elevation view of a ring;
Figure 8 is a sectional view, taken along a diametrical plane, of the ring of Figure 7;
Figure 9 is a top elevation view of a locking pin;
Figure 10 is an enlarged-scale view of a portion of the exploded view of Figure 2, illustrating a further embodiment of the connecting element;
Figure 11 is a partially sectional side elevation view of another embodiment of the connecting element;
Figure 12 is a view, similar to Figure 11, in which the connecting element is associated with a hub;
Figure 13 is an exploded view of a second embodiment of the fixing device according to the invention;
Figure 14 is an exploded view, taken from another viewpoint, of the embodiment of the fixing device shown in Figure 13;
Figure 15 is an exploded view of still another embodiment of the fixing device;
Figure 16 is an exploded view, taken from another viewpoint, of the embodiment of the fixing device of Figure 15.

In the examples of embodiments that follow, individual characteristics, given in relation to specific examples, may actually be interchanged with other different characteristics existing in other examples of embodiment.

### Ways to carrying out the Invention

With reference to the figures, a wheel fixing device, generally designated by the reference numeral 1, according to the present invention, comprises a hub 2, which by way of appropriate means known per se, such as for example an Allen screw 3, is designed to be associated with an axle shaft 100 of a go-kart or similar vehicle.

In particular, if the hub 2 is associated with a driving axle shaft, the Allen screw 3 allows to lock at least one portion of the internal surface 2a of the hub 2 to a respective abutment portion of the driving axle shaft, so as to allow transfer of the rotation (and therefore of the torque) from the axle shaft to the hub 2.

If instead, the hub 2 is to be associated with the free wheels (and therefore not with driving axle shafts), advantageously, the terminal portions of the internal surface 2a of the hub 2 are associated with a respective bearing, for example of the ball type, in order to allow the relative rotation of the hub 2 (and therefore of the wheel assembly associated therewith) with respect to the axle shaft.

According to the invention, a fixing device 1 is provided with a connecting element 4, which is associated with a substantially terminal portion 2b of the hub 2.

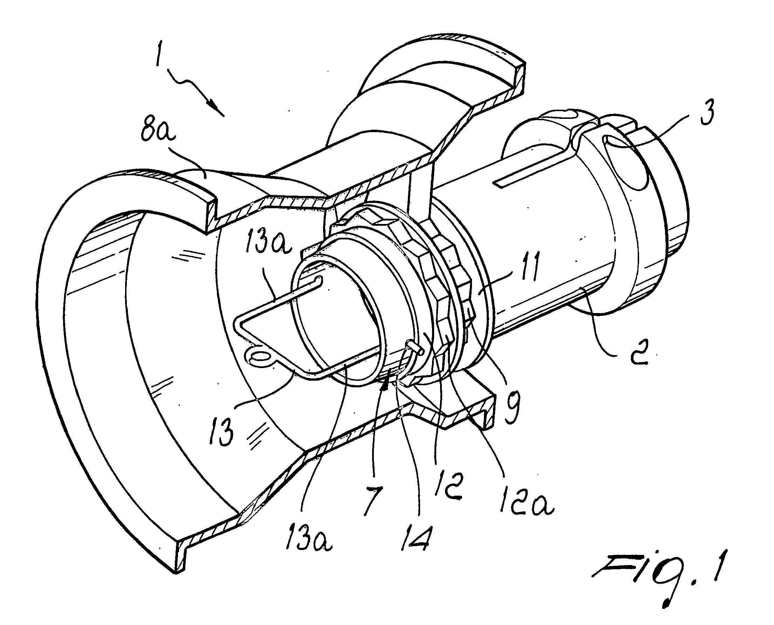

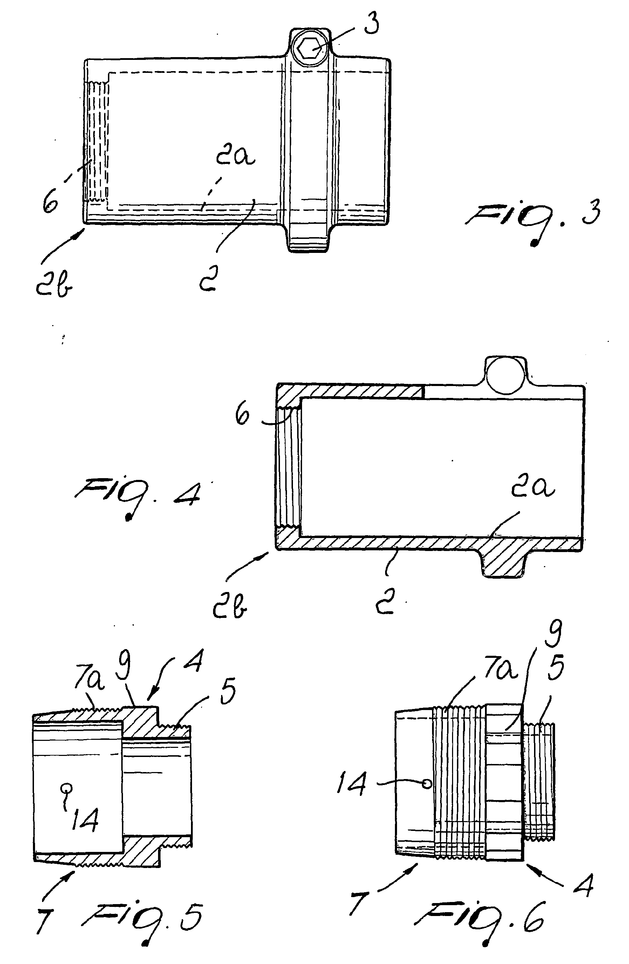

For example, as shown in Figures 1 to 12, it is possible to provide means for anchoring one another the connecting element 4 and the substantially terminal portion 2b of the hub 2: in particular, such anchoring means can be advantageously constituted by a screw-and-nut coupling.

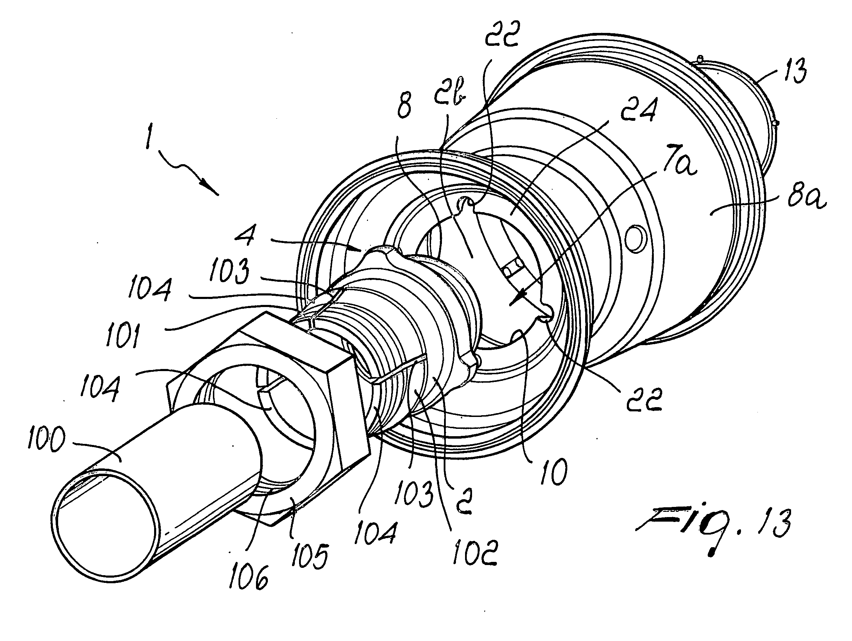

However, as clearly shown in Figures 13 to 16, there is nothing to prevent the connecting element 4 and the hub 2 from constituting a single body.

This variant is the one to which the presently claimed invention is directed.

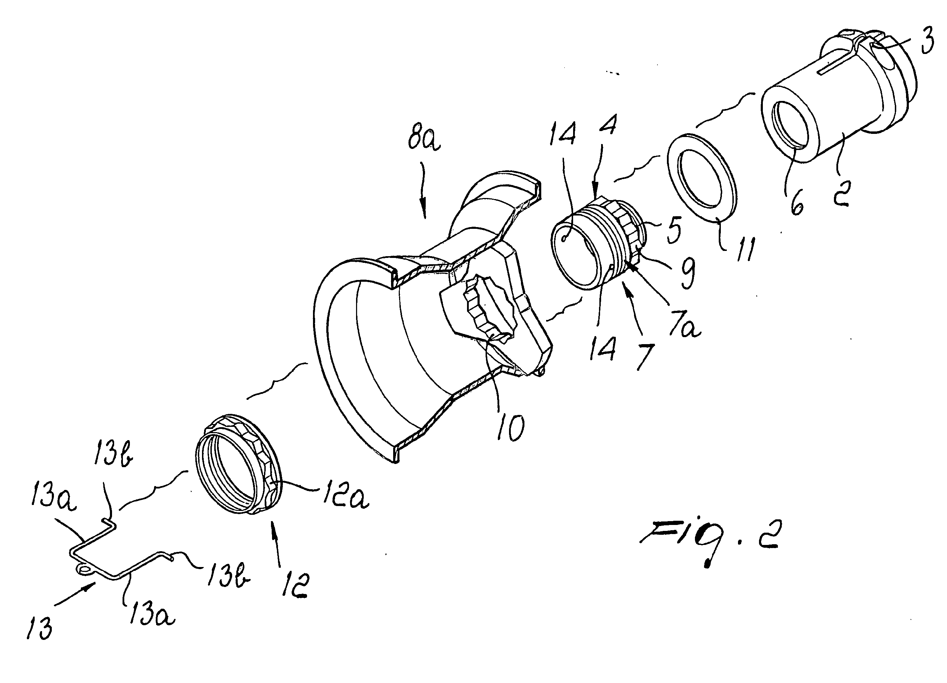

In greater detail, and with particular reference to Figures 2 to 4, the screw-and-nut coupling can be provided by a threaded element 5, which is supported by the connecting element 4 and is designed to engage a female thread element 6 formed at the terminal portion 2b of the hub 2: conveniently, the female thread element 6 is obtained by providing for example a thread at the terminal portion of the internal surface 2a of the hub 2.

Also according to the invention, the connecting element 4 supports at least one stem 7 that extends substantially along the rotation axis of the hub 2 and has at least one retaining portion 7a, such as for example a first thread 8, that is designed to engage means for locking a wheel 8a.

Conveniently, the retaining portion 7a, as clearly shown in the figures and as mentioned earlier, can be constituted by a first thread 8 that is supported by the stem 7, while the locking means can be constituted by a locking ring 12.

Moreover, the connecting element 4 rigidly rotationally supports means for engaging a respective abutment portion supported by the wheel 8a.

Merely by way of example, the engagement means, as shown in the figures, can be constituted by at least one contoured profile 9; in this case, the abutment portion supported by the wheel 8 is constituted by an abutment profile 10 that is shaped so as to match the contoured profile 9.

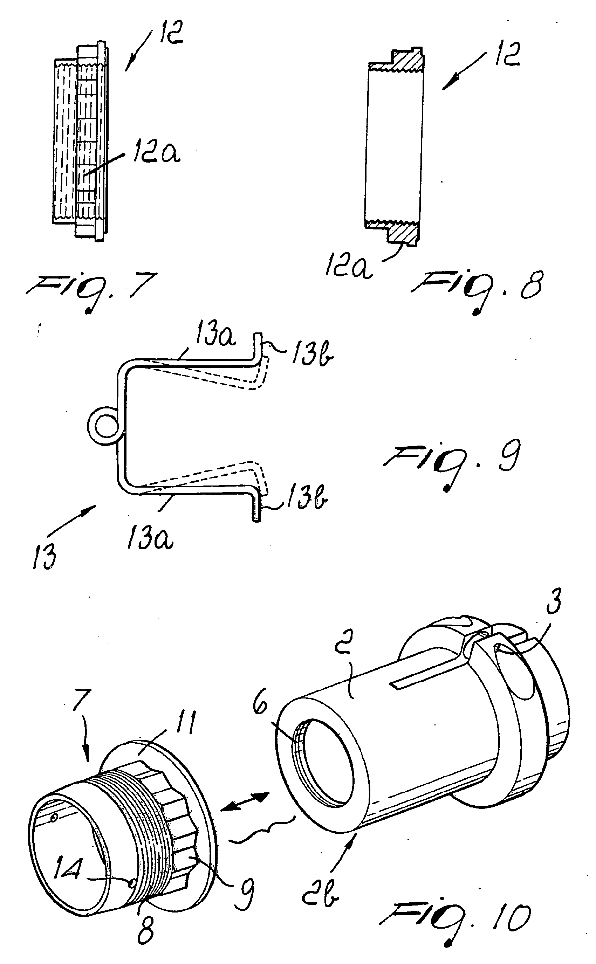

Conveniently, the contoured profile 9 is constituted by a polygonal profile, which is optionally star-shaped, as clearly shown for example in Figure 10, so as to allow effective mating of the surfaces.

Of course, the abutment profile 10 is also shaped complementarily with respect to the contoured profile 9 and is accordingly constituted by a through opening that is also complementarily star-shaped.

The contoured profile 9 is arranged between the screw element 5 and the first thread 8. Conveniently, the connecting element 4 is further associated with an abutment ring 11 which, when the screw element 5 is fully engaged with the female thread element 6, is designed to rest against the end surface (which during use lies on a substantially vertical plane) of the hub 2.

However, the abutment ring 11 can be formed monolithically with the connecting element 4 or, as shown in Figures 10 to 12, as a separate part. In this last case, it is however convenient to provide, at the connecting element 4, an annular locator profile for said abutment ring 11.

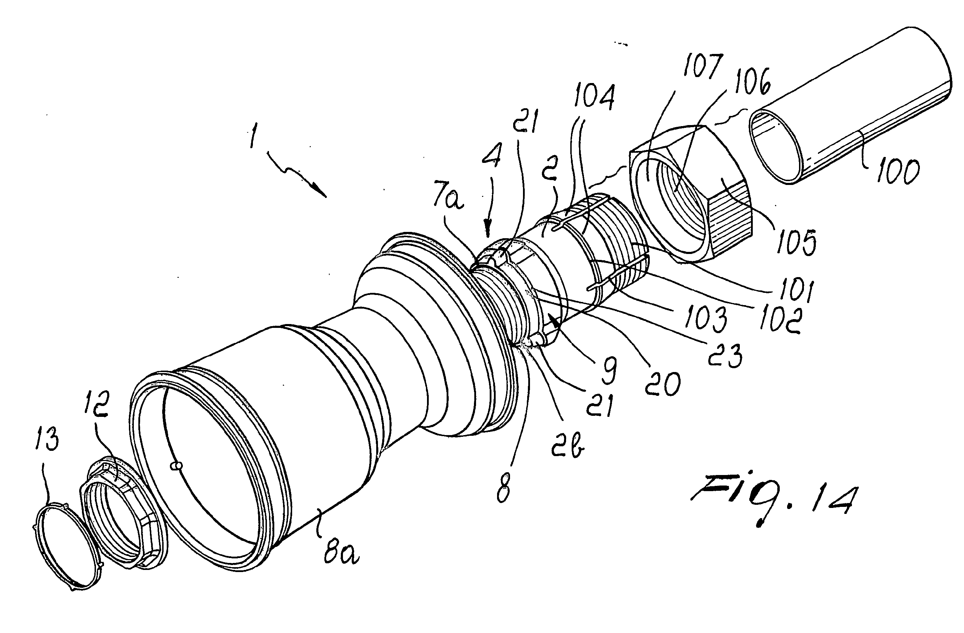

With reference to the embodiment shown in Figures 13 and 14, one can see that the contoured profile 9 can be constituted by a plurality of circumferential portions 20, between which respective radially protruding portions 21 are interposed. Conveniently, the protruding portions 21 are angularly spaced. Likewise, the abutment profile 10 is constituted by a corresponding number of circumferential portions, between which recesses 22, shaped complementarily with respect to the protrusions 21, are interposed.

However, there is nothing that prevents the provision of the recesses at the contoured profile 9 and of the protrusions on the abutment profile 10.

Conveniently, it is further possible to provide a shoulder 23 that is designed to abut against an abutment portion 24 supported by the wheel.

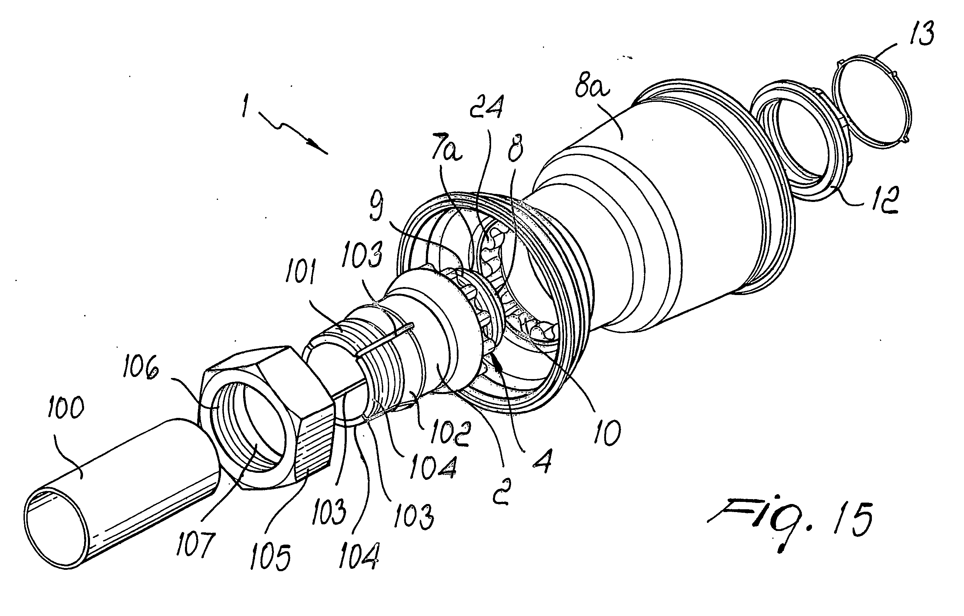

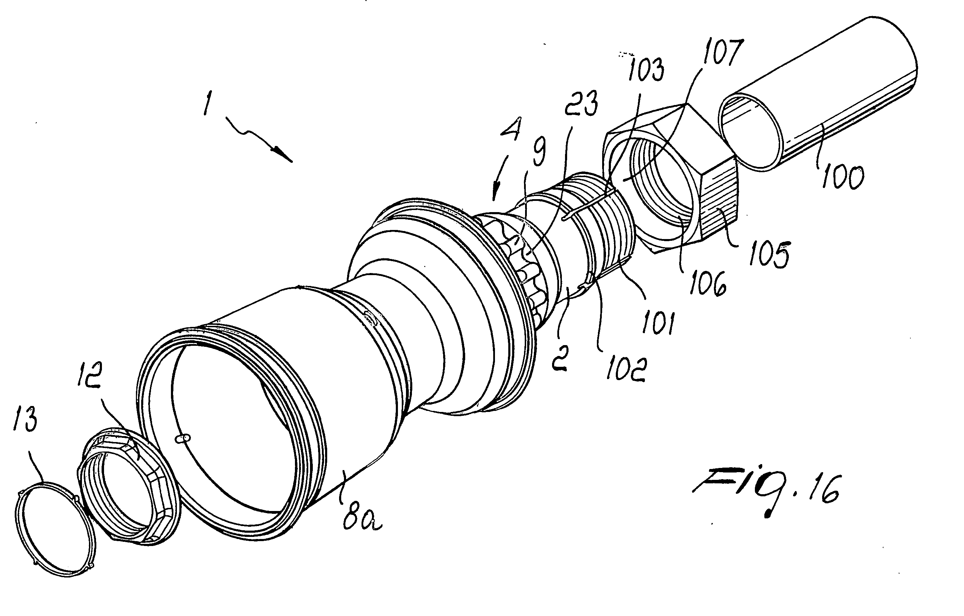

Reverting now to another embodiment shown in Figures 15 and 16, it is possible to notice that the contoured profile 9 (and likewise the abutment profile 10) are constituted by an alternating sequence of protrusions and recesses that lie substantially along a circumference.

As already mentioned earlier, locking of the wheel 8a to the connecting element 4 is ensured by way of locking means such as a locking ring 12.

In order to allow the locking ring 12 to stay engaged with the first thread 8 (when the wheel needs to be kept rigidly coupled to the hub 2), means are provided for keeping the locking ring 12 in locked position.

Such means for keeping in locked position can be constituted, as clearly shown in the figures, by a pin 13, which has two elastically deformable arms 13a that support, at their respective terminal portions, prongs 13b that are designed to be inserted within openings or engagement holes 14 supported by the stem 7.

According to a preferred embodiment, the contoured profile 9 tapers towards the stem 7 so as to ensure easier centering of the wheel and at the same time increase contact between the contoured profile 9 and the abutment profile 10 supported by the wheel 8a.

Conveniently, the first thread 8 and the thread supported by the threaded element 5 are oppositely orientated.

In particular, the thread supported by the threaded element 5 is a left-handed thread, so as to prevent unscrewing that might occur during startup, while the first thread 8 can be advantageously a right-handed thread.

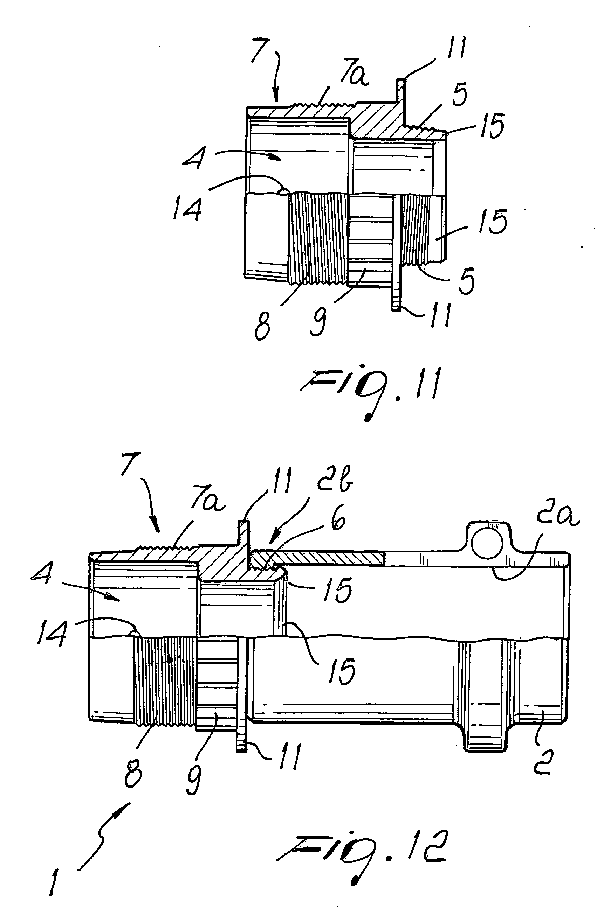

As clearly shown in Figures 11 and 12, the connecting element 4 can be provided with means for preventing unscrewing, which can be constituted for example by at least one radially deformable wing 15 that protrudes from the threaded element 5 on the opposite side with respect to the stem 7.

Conveniently, as shown in the figures, the deformable wing 15 has an annular extension.

Once the threaded element 5 has been screwed onto the female thread 6 supported by the hub 2, the wing 15 is deformed radially (outwardly), as clearly shown in Figure 12, so as to prevent unscrewing of the threaded element 5 from the female thread 6.

According to a further aspect, the present invention provides a device for locking a hub 2 to an axle shaft 100.

In particular, such locking device provides on the hub 2, at a terminal portion thereof that is designed to be locked to the respective axle shaft 100, a threaded portion 101 that is connected to the remaining body of the hub by a frustum-shaped portion 102, whose diameter increases gradually from the threaded portion 101 towards the body of the hub.

At the threaded portion 101 and, optionally at the frustum-shaped portion 102, there are at least two longitudinal slots 103, which form two or more axially deformable longitudinal wings 104.

The locking device further comprises a coupling nut 105, which supports a coupling female thread 106 that is designed to engage the threaded portion 101 and a smooth (optionally slightly frustum-shaped) portion 107 that is designed to be associated with the frustum-shaped portion 102.

It is evident that by screwing the coupling nut 105 onto the threaded portion 101, deformation of the longitudinal wings 105 is ensured and therefore locking of the hub 2 on the axle shaft 100 is also ensured.

The presence of the frustum-shaped portion 102 (and of the respective smooth portion 107) on the coupling nut 104 allows, during use, to prevent unscrewing of the coupling nut 104 from the threaded portion 101 due to the friction produced between the two smooth surfaces.

Operation of the invention is clearly evident from what has been described above.

Once the connecting element 4 has been optionally anchored to the hub 2 (optionally by deforming the wing 15), if it is necessary to mount the wheel 8a it is sufficient to insert its abutment profile 10 within the stem 7 and then make it engage the contoured profile 9 (optionally in abutment against the shoulder 23).

At this point, it is sufficient, for example by means of any suitable wrench, to screw the locking ring 12 onto the first thread 8 and insert the pin 13 to prevent loosening of the locking ring 12.

Removing the wheel 8a is also a quick and straightforward operation, since it is sufficient to unscrew the locking ring 12 after removing the pin 13.

It has been shown that a wheel fixing device particularly for go-karts and similar vehicles, according to the invention, fully achieves the intended aim and objects.

The characteristics that are indicated as advantageous, convenient or the like may also be omitted or replaced with equivalents.

All the details may further be replaced with other technically equivalent elements.

For example, the means for anchoring the connecting element 4 to the hub 2 can be constituted by a plurality of screws that can engage within respective female threads that are advantageously evenly angularly spaced and are supported by the end surface of the hub 2. In this case, the abutment ring 11 can be thicker in order to allow to optionally sink the heads of the screws within the thickness.

The materials and the dimensions and shapes may be any according to requirements.

## Claims

1. A wheel fixing device, particularly for go-karts and similar vehicles, comprising: a connecting element (4) that comprises at least one stem (7) provided with at least one retaining portion (7a) and means (9) for engaging a respective abutment portion (10) supported by a wheel (8a); and locking means (12) adapted to engage said retaining portion (7a) for the locking of said wheel (8a) to said connecting element (4), **characterized in that** it further comprises a hub (2) that has a first terminal portion (2b) associated to said connecting element (4) so as to constitute a single body with said connecting element (4) and a second, opposite terminal portion that is provided with means (3 , 101, 105) for associating the hub (2) to an abutment portion of an axle shaft (100) of the vehicle, said wheel (8a) being fixed to said hub (2) upon locking the wheel to said connecting element (4).

2. The fixing device according to claim 1, **characterized in that** said stem (7) lies substantially along the rotation axis of said hub (2) and said retaining portion (7a) comprises a first thread (8) that is supported by said stem (7), said locking means comprising a locking ring (12) that is designed to engage said first thread (8).

3. The wheel fixing device according to one or more of the preceding claims, **characterized in that** said engagement means (9) comprise at least one contoured profile that is supported by said connecting element (4) and said respective abutment portion (10) comprises an abutment profile that is rigidly coupled to said wheel, is shaped so as to match said contoured profile, and is adapted to engage said contoured profile.

4. The fixing device according to claim 1, **characterized in that** said hub (2) and said connecting element (4) are formed monolithically.

5. The wheel fixing device according to one or more of the claims 1-3, **characterized in that** said connecting element (4) comprises means for anchoring to said hub (2) which comprise at least one screw-and-nut coupling.

6. The wheel fixing device according to claim 5, **characterized in that** said at least one screw-and-nut coupling comprises a threaded element (5) that is supported by said connecting element (4) and a female thread portion (6) that is formed on said hub.

7. The fixing device according to claim 6, **characterized in that** said connecting element (4) comprises means for preventing unscrewing of said threaded element from said female thread.

8. The fixing device according to claim 7, **characterized in that** said means for preventing unscrewing comprise at least one radially deformable wing (15) that protrudes from said threaded element (5) on the opposite side with respect to said stem (7).

9. The fixing device according to one or more of the preceding claims, **characterized in that** said connecting element (4) comprises an abutment ring (11) that is designed to engage by abutment against the end plane of said hub (2).

10. The fixing device according to one or more of the claims 3-9, **characterized in that** said contoured profile (9) has a polygonal profile.

11. The fixing device according to claim 10, **characterized in that** said polygonal profile is star-shaped.

12. The fixing device according to one or more of the claims 3-11, **characterized in that** said contoured profile (9) comprises a plurality of circumferential portions (20) between which respective radially protruding and angularly spaced portions (21) are interposed, said abutment profile (10) comprising respective circumferential portions between which recesses (22) shaped complementarily with respect to said protrusions are interposed.

13. The fixing device according to one or more of the claims 3-12, **characterized in that** said contoured profile (9) comprises an alternating sequence of protrusions and recesses that lie substantially along a circumference.

14. The fixing device according to one or more of the claims 2-13, **characterized in that** it comprises means (13) for retaining said ring (12) in the locked condition.

15. The fixing device according to claim 14, **characterized in that** said means for retention in the locked position comprise a pin (13) engageable within abutment seats formed in said stem.

16. The fixing device according to claim 14, **characterized in that** said means for retention in the locked position comprise a nut for preventing unscrewing.

17. The fixing device according to one or more of the claims 6-16, **characterized in that** said first thread (8) and the thread formed on said threaded element (5) have opposite winding directions.

18. The fixing device according to one or more of the claims 3-17, **characterized in that** said contoured profile (9) tapers towards said stem (7).

19. The fixing device according to one or more of the preceding claims, **characterized in that** said association means provided at said a second, opposite terminal portion of said hub (2) are constituted by a fixing device comprising a threaded portion (101) that is connected to the hub body by a frustum-shaped portion (102), said threaded portion (101) and said frustum-shaped portion (102) having at least two longitudinal slots (103) that form axially deformable longitudinal wings (104), said locking device comprising a coupling nut (105) that internally supports a female thread (106) for coupling that is designed to engage said threaded portion (101).

20. The fixing device according to claim 19, **characterized in that** said coupling nut (105) is provided internally with a smooth portion (107) that is designed to engage said frustum-shaped portion (102) as a consequence of screwing of said coupling nut (105) onto said threaded portion (101).

21. The fixing device according to claim 20, **characterized in that** said smooth portion (107) is frustum-shaped.

22. The fixing device according to one or more of the claims 1-18, **characterized in that** said association means for associating the hub (2) to an abutment portion of an axle shaft (100) of a vehicle comprise an Allen screw (3) suitable to provide association of the hub (2) to the abutment portion of the axle shaft (100) of a vehicle, directly or through a bearing.

## Patentansprüche

1. Eine Radbefestigungsvorrichtung, insbesondere für Go-Karts und ähnliche Fahrzeuge, die Folgendes umfasst: ein Verbindungselement (4), das mindestens einen Schaft (7) umfasst, der mit mindestens einem Halteabschnitt (7a) und mit Mitteln (9) zum Eingreifen in einen entsprechenden Widerlagerabschnitt (10) ausgestattet ist, der von einem Rad (8a) getragen wird; und Verriegelungsmittel (12) umfasst, die ausgebildet sind, um in den Halteabschnitt (7a) zum Verriegeln des Rades (8a) an dem Verbindungselement (4) einzugreifen, **dadurch gekennzeichnet, dass** sie weiter eine Nabe (2) umfasst, die einen ersten Endabschnitt (2b) hat, der mit dem Verbindungselement (4) gekoppelt ist, so dass sie einen einzigen Körper mit dem Verbindungselement (4) bildet, und einen zweiten, gegenüberliegenden Endabschnitt umfasst, der mit Mitteln (3, 101, 105) zur Kopplung der Nabe (2) mit einem Widerlagerabschnitt einer Achswelle (100) des Fahrzeugs ausgestattet ist, wobei das Rad (8a) bei der Verriegelung des Rades an dem Verbindungselement (4) an der Nabe (2) befestigt wird.

2. Die Befestigungsvorrichtung gemäß Anspruch 1, **dadurch gekennzeichnet, dass** der Schaft (7) im Wesentlichen entlang der Drehachse der Nabe (2) liegt und der Halteabschnitt (7a) ein erstes Gewinde (8) umfasst, das von dem Schaft (7) getragen wird, wobei die Verriegelungsmittel einen Schließring (12) umfassen, der konstruiert ist, um in das erste Gewinde (8) einzugreifen.

3. Die Radbefestigungsvorrichtung gemäß einem oder mehreren der obigen Ansprüche, **dadurch gekennzeichnet, dass** die Eingriffsmittel (9) mindestens ein geformtes profil umfassen, das von dem Verbindungselement (4) getragen wird, und dass der entsprechende Widerlagerabschnitt (10) ein Widerlager-Profil umfasst, das starr mit dem Rad gekoppelt ist, so geformt ist, dass es dem geformten Profil entspricht, und ausgebildet ist, um in das geformte Profil einzugreifen.

4. Die Befestigungsvorrichtung gemäß Anspruch 1, **dadurch gekennzeichnet, dass** die Nabe (2) und das Verbindungselement (4) monolithisch geformt sind.

5. Die Radbefestigungsvorrichtung gemäß einem oder mehreren der Ansprüche 1-3, **dadurch gekennzeichnet, dass** das Verbindungselement (4) Mittel zur Verankerung an der Nabe (2) umfasst, die mindestens eine Schraubverbindung umfassen.

6. Die Radbefestigungsvorrichtung gemäß Anspruch 5, **dadurch gekennzeichnet, dass** die mindestens eine Schraubverbindung ein mit Gewindeelement (5) umfasst, das von dem Verbindungselement (4) getragen wird, und einen Innengewindeabschnitt (6), der an der Nabe geformt ist.

7. Die Befestigungsvorrichtung gemäß Anspruch 6, **dadurch gekennzeichnet, dass** das Verbindungselement (4) Mittel zum Verhindern des Herausschraubens des Gewindeelements aus dem Innengewinde umfasst.

8. Die Befestigungsvorrichtung gemäß Anspruch 7, **dadurch gekennzeichnet, dass** die Mittel zum Verhindern des Herausschraubens mindestens einen radial verformbaren Flügel (15) umfassen, der von dem mit dem Gewindeelement (5) an der dem Schaft (7) gegenüberliegenden Seite herausragt.

9. Die Befestigungsvorrichtung gemäß einem oder mehreren der obigen Ansprüche, **dadurch gekennzeichnet, dass** das Verbindungselement (4) einen Anschlagring (11) umfasst, der konstruiert ist, um durch Anschlag in die Endfläche der Nabe (2) einzugreifen.

10. Die Befestigungsvorrichtung gemäß einem oder mehreren der Ansprüche 3-9, **dadurch gekennzeichnet, dass** das geformte Profil (9) ein vieleckiges Profil hat.

11. Die Befestigungsvorrichtung gemäß Anspruch 10, **dadurch gekennzeichnet, dass** das vieleckige Profil sternförmig ist.

12. Die Befestigungsvorrichtung gemäß einem oder mehreren der Ansprüche 3-11, **dadurch gekennzeichnet, dass** das geformte Profil (9) eine Vielzahl von Umfangsabschnitten (20) umfasst, zwischen denen radial herausragende und winklig beabstandete Abschnitte (21) angeordnet sind, wobei das Widerlager-Profil (10) entsprechende Umfangsabschnitte umfasst, zwischen denen Vertiefungen (22), komplementär zu den Vorsprüngen geformt, angeordnet sind.

13. Die Befestigungsvorrichtung gemäß einem oder mehreren der Ansprüche 3-12, **dadurch gekennzeichnet, dass** das geformte Profil (9) eine alternierende Sequenz von Vorsprüngen und Vertiefungen umfasst, die im Wesentlichen entlang einem Umfang liegen.

14. Die Befestigungsvorrichtung gemäß einem oder mehreren der Ansprüche 2-13, **dadurch gekennzeichnet, dass** sie Mittel (13) zum Halten des Rings (12) in dem verriegelten Zustand umfasst.

15. Die Befestigungsvorrichtung gemäß Anspruch 14, **dadurch gekennzeichnet, dass** die Mittel zum Halten in der verriegelten Position einen Stift (13) umfassen, der in den Widerlager-Sitzen in Eingriff gebracht werden kann, die in dem Schaft gebildet sind.

16. Die Befestigungsvorrichtung gemäß Anspruch 14, **dadurch gekennzeichnet, dass** die Mittel zum Halten in der verriegelten position eine Mutter zum Verhindern von Losschrauben umfassen.

17. Die Befestigungsvorrichtung gemäß einem oder mehreren der Ansprüche 6-16, **dadurch gekennzeichnet, dass** das erste Gewinde (8) und das Gewinde, das an dem Gewindeelement (5) geformt ist, entgegengesetzte Gewinde-Richtungen haben.

18. Die Befestigungsvorrichtung gemäß einem oder mehreren der Ansprüche 3-17, **dadurch gekennzeichnet, dass** das geformte Profil (9) zu dem Schaft (7) hin spitz zuläuft.

19. Die Befestigungsvorrichtung gemäß einem oder mehreren der obigen Ansprüche, **dadurch gekennzeichnet, dass** die Kopplungssmittel, die an dem zweiten, gegenüberliegenden Endabschnitt der Nabe (2) bereitgestellt sind, aus einer Befestigungsvorrichtung bestehen, die einen Gewindeabschnitt (101) umfasst, welcher durch einen stumpfförmigen Abschnitt (102) mit dem Nabenkörper verbunden ist, wobei der Gewindeabschnitt (101) und der stumpfförmige Abschnitt (102) mindestens zwei Längsschlitze (103) haben, welche axial verformbare Längsflügel (104) bilden, wobei die Verriegelungsvorrichtung eine Spannmutter (105) umfasst, die intern ein Innengewinde (106) zur Kopplung trägt, das konstruiert ist, um in den Gewindeabschnitt (101) einzugreifen.

20. Die Befestigungsvorrichtung gemäß Anspruch 19, **dadurch gekennzeichnet, dass** die Spannmutter (105) innen mit einem glatten Abschnitt (107) versehen ist, der dazu dient, in den stumpfförmigen Abschnitt (102) infolge des Aufschraubens der Spannmutter (105) auf den Gewindeabschnitt (101) einzugreifen.

21. Die Befestigungsvorrichtung gemäß Anspruch 20, **dadurch gekennzeichnet, dass** der glatte Abschnitt (107) stumpfförmig ist.

22. Die Befestigungsvorrichtung gemäß einem oder mehreren der Ansprüche 1-18, **dadurch gekennzeichnet, dass** die Kopplungsmittel zur Kopplung der Nabe (2) mit einem Widerlagerabschnitt einer Achswelle (100) eines Fahrzeugs eine Inbusschraube (3) umfassen, die geeignet ist, eine Kopplung der Nabe (2) mit dem Widerlagerabschnitt der Achswelle (100) eines Fahrzeugs direkt oder durch ein Lager herzustellen.

## Revendications

1. Dispositif de fixation de roue, en particulier pour des karts et des véhicules similaires, comprenant: un élément de connexion (4) qui comprend au moins une tige (7) munie d'au moins une partie de retenue (7a) et des moyens (9) pour venir en prise avec une partie de butée respective (6) supportée par une roue (8a), et des moyens de verrouillage (12) adaptés pour venir en prise avec ladite partie de retenue (7a) pour le verrouillage de ladite roue (8a) sur ledit élément de connexion (4), **caractérisé en ce qu'**il comprend en outre un moyeu (2) qui a une première partie terminale (2b) associée audit élément de connexion (4) de manière à constituer un corps en un seul bloc avec ledit élément de connexion (4), et une seconde partie terminale opposée qui est munie de moyens (3, 101, 105) pour associer le moyeu (2) à une partie de butée d'un arbre d'essieu (100) du véhicule, ladite roue (8a) étant fixée sur ledit moyeu (2) lors du verrouillage de la roue sur ledit élément de connexion (4).

2. Dispositif de fixation selon la revendication 1, **caractérisé en ce que** ladite tige (7) s'étend sensiblement le long de l'axe de rotation dudit moyeu (2), et ladite partie de retenue (7a) comprend un premier filetage (8) qui est supporté par ladite tige (7), lesdits moyens de verrouillage comprenant une bague de verrouillage (12) qui est conçue pour venir en prise avec ledit premier filetage (8).

3. Dispositif de fixation de roue selon une ou plusieurs des revendications précédentes, **caractérisé en ce que** lesdits moyens de mise en prise (9) comprennent au moins un contour profilé qui est supporté par ledit élément de connexion (4), et ladite partie de butée respective (10) comprend un contour de butée qui est couplé de manière rigide à ladite roue, est conformé de manière à correspondre audit contour profilé délimité, et est adapté pour venir en prise avec ledit contour profilé.

4. Dispositif de fixation selon la revendication 1, **caractérisé en ce que** ledit moyeu (2) et ledit élément de connexion (4) sont formés en un seul bloc.

5. Dispositif de fixation selon une ou plusieurs des revendications 1 à 3, **caractérisé en ce que** ledit élément de connexion (4) comprend des moyens d'ancrage sur ledit moyeu (2), comprenant au moins un couplage par vis et écrou.

6. Dispositif de fixation de roue selon la revendication 5, **caractérisé en ce que** ledit au moins un couplage par vis et écrou comprend un élément fileté (5) qui est supporté par ledit élément de connexion (4), et une partie de filetage femelle (6) qui est formée sur ledit moyeu.

7. Dispositif de fixation selon la revendication 6, **caractérisé en ce que** ledit élément de connexion (4) comprend des moyens pour empêcher un dévissage dudit élément fileté à partir dudit filetage femelle.

8. Dispositif de fixation selon la revendication 7, **caractérisé en ce que** lesdits moyens pour empêcher un dévissage comprennent au moins une ailette déformable radialement (15) qui fait saillie à partir dudit élément fileté (5) sur le côté opposé par rapport à ladite tige (7).

9. Dispositif de fixation selon une ou plusieurs des revendications précédentes, **caractérisé en ce que** ledit élément de connexion (4) comprend une bague de butée (11) qui est conçue pour venir en prise par butée contre le plan d'extrémité dudit moyeu (2).

10. Dispositif de fixation selon une ou plusieurs des revendications 3 à 9, **caractérisé en ce que** ledit contour profilé (9) a un profil polygonal.

11. Dispositif de fixation selon la revendication 10, **caractérisé en ce que** ledit profil polygonal est en forme d'étoile.

12. Dispositif de fixation selon une ou plusieurs des revendications 3 à 11, **caractérisé en ce que** ledit contour profilé (9) comprend une pluralité de parties circonférentielles (20) entre lesquelles des parties faisant saillie radialement et espacées angulairement respectives (21) sont interposées, ledit contour de butée (10) comprenant des parties circonférentielles respectives entre lesquelles sont interposés des évidements (22) conformés de manière complémentaire par rapport auxdites saillies.

13. Dispositif de fixation selon une ou plusieurs des revendications 3 à 12, **caractérisé en ce que** ledit contour profilé (9) comprend une succession alternée de saillies et d'évidements qui s'étendent sensiblement le long d'une circonférence.

14. Dispositif de fixation selon une ou plusieurs des revendications 2 à 13, **caractérisé en ce qu'**il comprend des moyens (13) pour retenir ladite bague (12) dans l'état verrouillé.

15. Dispositif de fixation selon la revendication 14, **caractérisé en ce que** lesdits moyens de retenue dans la position verrouillée comprennent une broche (13) pouvant venir en butée dans des sièges de butée formés dans ladite tige.

16. Dispositif de fixation selon la revendication 14, **caractérisé en ce que** lesdits moyens de retenue dans la position verrouillée comprennent un écrou pour empêcher un dévissage.

17. Dispositif de fixation selon une ou plusieurs des revendications 6 à 16, **caractérisé en ce que** ledit premier filetage (8) et le filetage formé sur ledit élément fileté (5) ont des sens d'enroulement opposés.

18. Dispositif de fixation selon une ou plusieurs des revendications 3 à 17, **caractérisé en ce que** ledit contour profilé (9) s'effile vers ladite tige (7).

19. Dispositif de fixation selon une ou plusieurs des revendications précédentes, **caractérisé en ce que** lesdits moyens d'association prévus dans ladite seconde partie terminale opposée dudit moyeu (2) sont constitués d'un dispositif de fixation comprenant une partie filetée (101) qui est reliée au corps de moyeu par une partie de forme tronconique (102), ladite partie filetée (101) et ladite partie de forme tronconique (102) ayant au moins deux fentes longitudinales (103) qui forment des ailettes longitudinales déformables axialement (104), ledit dispositif de verrouillage comprenant un écrou de couplage (105) qui comporte de manière interne un filetage femelle (106) de couplage, qui est conçu pour venir en prise avec ladite partie filetée (101).

20. Dispositif de fixation selon la revendication 19, **caractérisé en ce que** ledit écrou de couplage (105) comporte intérieurement une partie lisse (107) qui est conçue pour venir en prise avec ladite partie de forme tronconique (102) suite à un vissage dudit écrou de couplage (105) sur ladite partie filetée (101).

21. Dispositif de fixation selon la revendication 20, **caractérisé en ce que** ladite partie lisse (107) est de forme tronconique.

22. Dispositif de fixation selon une ou plusieurs des revendications 1 à 18, **caractérisé en ce que** lesdits moyens d'association pour associer le moyeu (2) à une partie de butée d'un arbre d'essieu (100) d'un véhicule comprennent une vis creuse de type Allen (3) appropriée pour fournir une association du moyeu (2) avec la partie de butée de l'arbre d'essieu (100) d'un véhicule, directement ou par l'intermédiaire d'un palier.
